(19)

Europäisches
Patentamt
European
Patent Office
Office européen
des brevets

(11) **EP 3 855 005 A2**

(12) **EUROPEAN PATENT APPLICATION**

(43) Date of publication:
**28.07.2021 Bulletin 2021/30**

(51) Int Cl.:
**F02C 9/00** (2006.01)     **F02K 3/06** (2006.01)
**B64D 31/00** (2006.01)

(21) Application number: **21150296.8**

(22) Date of filing: **05.01.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2020 GB 202000831**

(71) Applicant: **Rolls-Royce plc
London N1 9FX (GB)**

(72) Inventors:
• **Bemment, Craig
  Derby, Derbyshire DE24 8BJ (GB)**
• **Dunning, Pascal
  Derby, Derbyshire DE24 8BJ (GB)**

(74) Representative: **Rolls-Royce plc
Intellectual Property Dept SinA-48
PO Box 31
Derby DE24 8BJ (GB)**

(54) **GAS TURBINE ENGINE**

(57)     A gas turbine engine (10) comprises a fan (23), a compressor (14, 15), a low pressure turbine (19) and a high pressure turbine (17). The fan diameter is greater than 250 cm and less than 381 cm, and the gas turbine engine has a first thrust at sea level static conditions and a second thrust at end of runway conditions, and a thrust take-off ratio greater than 1.32, wherein the thrust take-off ratio is the ratio of the first thrust to the second thrust.

# Fig.1

EP 3 855 005 A2

**Description**

The present disclosure relates to a gas turbine engine, an aircraft, a method of operating a gas turbine engine for take-off, and a method of taking off an aircraft.

Turbofan gas turbine engines for aircraft propulsion have many design factors that affect the overall efficiency and power output or thrust. To enable a higher thrust while maintaining efficiency, a larger diameter fan may be used. As the diameter of the fan is increased, however, the required lower speed of the fan tends to conflict with the requirements of the turbine component the core shaft is connected to, typically a low pressure turbine. A more optimal combination can be achieved by including a gearbox between the fan and the core shaft, which allows the fan to operate at a reduced rotational speed, and therefore enables a larger size fan, while maintaining a high rotational speed for the low pressure turbine, enabling the overall diameter of the turbine to be reduced.

A key driver in gas turbine engine design is designing for cruise conditions, as cruise conditions are where the majority of flight time is spent and fuel consumed.

However as the gas turbine size increases, the constraints from other operating conditions, for example take-off, can change or have more of an impact on the overall engine design. Examples of negative take-off constraints are as follows. At take-off a larger fan will be more affected by cross winds, which place additional stresses on the fan blades during take-off. It also becomes harder to install a larger engine under the wing whilst maintaining clearances to the ground. A larger fan can impose greater forces through the aircraft structure, for example the wing.

To overcome cross winds the nacelle inlet can be lengthened or the fan blades strengthened, however both options can compromise the efficiency of the gas turbine engine. Solutions for installing larger, heavier engines can also compromise aerodynamics, for example by impacting the shape and weight of the nacelle or wing, or the need for a variable area nozzle.

It is therefore desirable to provide an improved aircraft and/or gas turbine engine that minimise the impact on, for example, overall efficiency, from take-off constraints.

According to a first aspect there is provided a gas turbine engine, the gas turbine engine comprising a fan, a compressor, a low pressure turbine and a high pressure turbine. The fan diameter is greater than 215 cm and less than 381 cm. The gas turbine engine has a first thrust at sea level static conditions and a second thrust at end of runway conditions. A thrust take-off ratio greater than 1.32. Wherein the thrust take-off ratio is the ratio of the first thrust to the second thrust.

The gas turbine may comprise a low pressure shaft and a high pressure shaft, wherein the low pressure shaft connects a fan to a fan drive turbine, for example via a power gearbox, and the high pressure shaft connects a high pressure turbine to a compressor section.

The first thrust and second thrust may be at constant turbine entry temperature and/or fan rotational speed and/or corrected fan rotational speed. The first thrust and second thrust may be at substantially constant turbine entry temperature and/or fan rotational speed. Substantially constant may include variations of 1%, 2%, 3% or 5% for example.

The first thrust may be the maximum, or flat rated, sea level static thrust. The first thrust may be close to the maximum sea level static thrust the gas turbine engine can create, for example within 1%, 2%, 3% or 5% of the maximum rated sea level static thrust the gas turbine can create. The second thrust may be the engine thrust just before take-off, for example as the wheels of the aircraft lift-off from the ground.

The thrust take-off ratio may be greater than 1.33. The thrust take-off ratio may be greater than 1.35. The thrust take-off ratio may be greater than 1.42 or 1.5. The thrust take-off ratio may be less than 1.8, or less than 1.7.

The thrust take-off ratio may be 1.32, 1.33, 1.35, 1.4, 1.42, 1.5, 1.6, 1.7 or 1.8. The thrust take-off ratio may be between two of these values, for example greater than 1.33 and less than 1.5 or greater than 1.4 and less than 1.7.

The fan diameter may be greater than 250 cm. The fan diameter may be greater than 300 cm. The fan diameter may be greater than 330 cm. The fan diameter may be greater than 350 cm.

The fan diameter may be less than 356 cm. The fan diameter may be less than 330 cm. The fan diameter may be less than 300 cm.

The gas turbine may comprise a power gearbox.

The power gearbox may comprise a gear ratio greater than 3.1. The power gearbox may comprise a gear ratio less than 3.8. The power gearbox may comprise a gear ratio between 3.2 and 3.7.

The gas turbine engine may have a (e.g. maximum) thrust greater than 180kN. The gas turbine engine may have a (e.g. maximum) thrust less than 400kN. The gas turbine engine may have a (e.g. maximum) thrust between 200kN and 300kN.

The gas turbine may have a specific thrust at cruise of less than 110 Nkg-1s, and optionally less than 100 Nkg-1s. The gas turbine may have a specific thrust at cruise of less than 90 Nkg-1s, and optionally less than 85 Nkg-1s. The gas turbine may have a specific thrust between 100 Nkg-1s and 60 Nkg-1s.

The fan may comprise less than 20 fan blades.

The gas turbine engine may have a bypass ratio greater than 12. The gas turbine engine may have a bypass ratio less than 18. The gas turbine engine may have a bypass ratio between 13 and 16.

According to a second aspect there is provided an aircraft comprising the gas turbine engine according to the first aspect.

According to a third aspect there is provided a method of operating a gas turbine engine for take-off of an aircraft, the gas turbine engine in accordance with the first aspect. The method comprises generating the first thrust at sea level static conditions. The method comprises generating the second thrust at end of runway conditions such that the thrust take-off ratio is achieved as the aircraft lifts off the ground.

According to a fourth aspect there is provided a method of operating a gas turbine engine for take-off of an aircraft, the gas turbine engine in accordance with the first aspect. The method comprises generating a derated first thrust at sea level static conditions. The method comprises generating the second thrust at end of runway conditions. The derated first thrust is approximately 10% lower than the first thrust.

A derated condition may be achieved by reducing the turbine entry temperature and/or fan rotational speed by the derated amount (for example approximately 10%) compared to their values at maximum (or close to maximum) sea level static thrust.

A derated condition may be achieved by reducing the turbine entry temperature and/or fan rotational speed by an amount suitable for reducing the first thrust by 10%.

Approximately 10% may be 10%, or 9% to 11%, or 7% to 13%. The first thrust may be derated by 5%, 7%, 9%, 10%, 11%, 13% or 15%. The first thrust may be derated by between one and another of the values above, for example between 5% and 11%, or between 9% and 15%.

According to a fifth aspect there is provided a method of taking off an aircraft, the aircraft comprising a gas turbine engine comprising a fan, a compressor, a low pressure turbine and a high pressure turbine. The method comprises operating the gas turbine engine to generate a first thrust at sea level static conditions and a second thrust at end of runway conditions. The method comprises applying a thrust reduction rate greater than 11%/km. The thrust reduction rate is defined as:

$$thrust\ reduction\ rate = \frac{\frac{first\ thrust - second\ thrust}{second\ thrust}}{distance\ travelled}$$

The distance travelled is the distance travelled along the runway between sea level static conditions and end of runway conditions. The method comprises lifting off the ground for take-off at end of runway conditions.

The thrust reduction rate may be greater than 20%/km. The thrust reduction rate may be greater than 30%/km. The thrust reduction rate may be greater than 40%/km.

The thrust reduction rate may be 11%/km, 15%/km, 20%/km, 25%/km, 29%/km, 30%/km, 35%/km or 40%/km. The thrust reduction rate may be between two of these values. For example the thrust reduction rate may be greater than 11%/km and less than 30%/km, or greater than 15%/km and less than 30%/km, or greater than 20%/km and less than 40%/km.

The airplane may have a maximum take-off weight of 280 tonnes. In other examples the airplane may have a take-off weight of for example 70, 200, 350, 300, 350 or 500 tonnes. The airplane may have a take-off weight between two of the aforementioned values, for example between 70 and 350 tonnes, or between 200 and 300 tonnes. The thrust take-off ratio or thrust reduction rate may be particularly advantageous for an airplane with maximum take-off weight between 200 and 350 tonnes. The thrust take-off ratio or thrust reduction rate may be further advantageous for an airplane with maximum take-off weight between 250 and 300 tonnes.

Advantageously the claimed thrust take-off ratio (and/or thrust reduction rate) may enable a take-off thrust profile along the runway that minimises the negative impacts, due to take-off constraints, of a larger diameter fan, whilst providing an overall improved gas turbine engine by enabling increased fuel consumption. For example increasing fan diameter may allow for a greater start of runway (static) thrust. Combining this with a steeper thrust reduction will reduce the time at lower aircraft speeds due to the engine providing higher thrust at lower speeds enabling quicker acceleration out of the zone where fans are particularly susceptible to crosswind which is for example aircraft speeds below 40 knots. As a result the effects of, for example, cross winds and/or impact on aircraft structures and/or tip rub, from take-off, may be minimised. This may be because the time spent at higher thrust levels is reduced because of the greater thrust take-off ratio. As a result components may be optimised for other power conditions, for example climb or cruise, and an increased efficiency and fuel consumption may be enabled.

Advantageously, the claimed thrust take-off ratio (and/or thrust reduction rate) may provide an improved aircraft wing. As the aircraft travels down the runway, the aerodynamic loads on the wing increase, whilst the thrust loads from the gas turbine decrease as a result of the claimed greater thrust take-off ratio. For the gas turbine engine configuration claimed herein it was advantageously found by the applicant that a greater thrust take-off ratio may provide a more optimum wing loading during take-off. For example the maximum wing loads may be reduced and/or the design point may be optimised. As a result, the amount of material comprising the wing structure and/or weight of the wing can be minimised and/or the shape of the wing can be improved and/or optimised.

On optimum thrust take-off ratio was found between 1.32 and 1.8. Increasing the thrust take-off ratio above 1.32, for example, (in addition to the aforementioned advantages) provides for an improved fan blade due to the reduced impact of cross winds and/or provides an improved wing. Decreasing the thrust rate from 1.8, for example, (in addition to the aforementioned advantages) reduces the impact on engine design due to installation requirements.

Derating the engine may advantageously exploit the greater start of runway static thrust whilst lowering core temperatures such that improved component life is achieved.

End of runway (EOR) or Maximum take-off (MTO) conditions may be defined as operating the engine at International Standard Atmosphere (ISA) sea level pressure and temperature conditions +15°C at end of runway, which is typically defined at an aircraft speed of around 0.25Mn, or between around 0.24 and 0.27 Mn. Maximum take-off conditions for the engine may therefore be defined as operating the engine at an end of runway thrust at ISA sea level pressure and temperature +15°C with a fan inlet velocity of 0.25 Mn. At EOR conditions the aircraft may lift off the runway.

Sea Level Static (SLS) conditions may be defined as operating the engine at International Standard Atmosphere (ISA) sea level pressure and temperature conditions +15°C at start of runway thrust when the aircraft has no forward velocity and/or is just about to start accelerating down the runway. SLS conditions may be just before, as, or just after the brakes are removed at the start of take-off.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg$^{-1}$s, 105 Nkg$^{-1}$s, 100 Nkg$^{-1}$s, 95 Nkg$^{-1}$s, 90 Nkg$^{-1}$s, 85 Nkg$^{-1}$s or 80 Nkg$^{-1}$s. The specific thrust may be in an inclusive range bounded by any two of the values in the previous sentence (i.e. the values may form upper or lower bounds), for example in the range of from 80 Nkg$^{-1}$s to 100 Nkg$^{-1}$s, or 85 Nkg$^{-1}$s to 95 Nkg$^{-1}$s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission")of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance-between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a graph showing take-off thrust profiles.

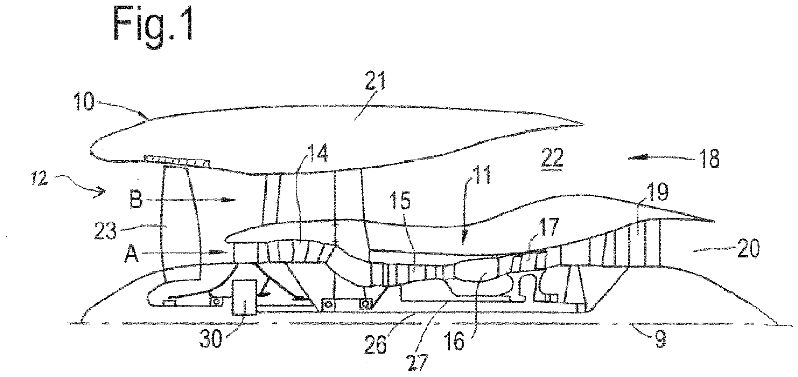

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

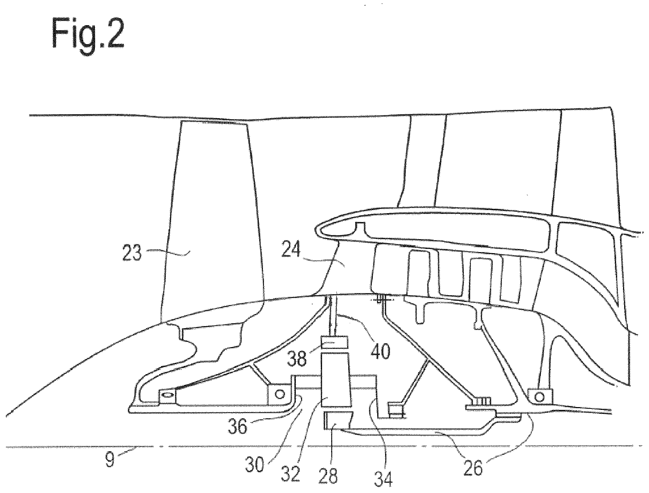

The geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

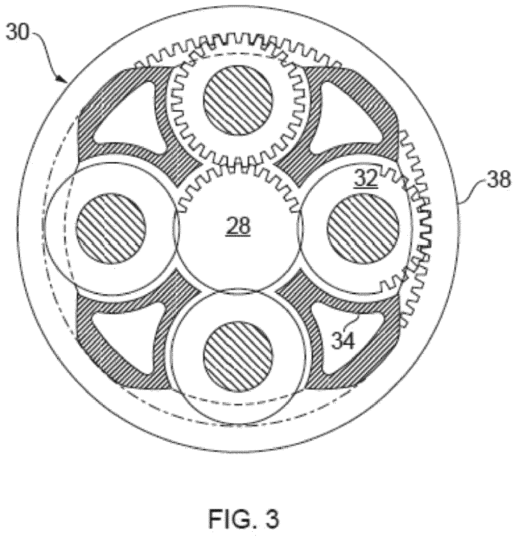

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

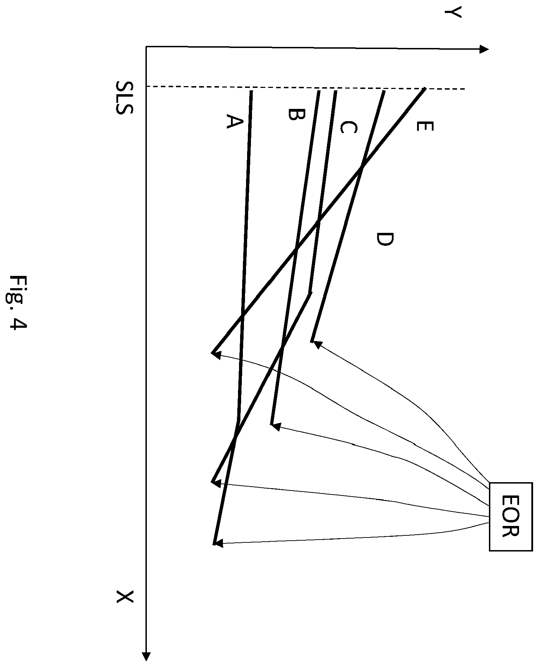

Figure 4 shows five thrust profiles used for take-off. The Y-axis represents thrust, and the X-axis represents distance.

Thrust profiles A, B, C and D represent prior art thrust profiles. Thrust profile E is in accordance with the thrust take-off ratio and thrust reduction rate as claimed herein. It can be seen that each profile starts from a static position on the runway, at SLS (Sea Level Static) conditions. The initial thrust is then reduced as the aircraft, powered by one or more gas turbines, travels down the runway until EOR (End of Runway) conditions (0.25 Mach number) are achieved, at which point the aircraft takes off. The thrust take-off ratio for each profile is the thrust at SLS conditions divided by the thrust at EOR conditions.

For example thrust profile A applies a substantially constant thrust level along the runway before gradually reducing the thrust for the last portion of the distance before take-off. Profile B applies a gradual decrease in thrust all the way along the runway before take-off. Profile C applies a shallow decrease in thrust for the first portion of the runway, followed by a steeper decrease in thrust in a second portion of the runway before take-off. Profile D applies a high thrust, with a small gradual decrease, along the runway, thereby achieving a shorter take-off distance than profiles A, B or C.

In contrast, profile E starts from a higher static thrust, even than profile D, at SLS and applies a steeper decrease in thrust before take-off.

It will be appreciated that in the figure 4 example each profile is being applied to a similar aircraft, and that in each case the aircraft is being accelerated to EOR conditions by the thrust profile along the runway.

It can be seen that profile E reaches EOR conditions over a shorter distance than profiles A, B and C. This is achieved by a higher thrust at SLS combined with a sharper reduction in thrust to EOR conditions. A higher thrust at SLS may, for example, be enabled by a larger diameter fan or larger bypass ratio. A geared architecture also enables a higher static thrust. In contrast the profiles A, B and C may be provided by engines that cannot achieve the thrust at SLS of the profile E. As such these engines cannot reach 0.25 Mn with such a thrust take-off ratio as shown in profile E.

It can be seen that profile D reaches EOR conditions over a slightly shorter distance that profile E. However in order to do so profile D maintains a high level of thrust, with slight reduction along the take-off distance, the whole distance between SLS and EOR conditions. In contrast, profile E has a higher thrust at SLS and a much lower thrust at EOR conditions compared to profile D.

It will be appreciated from Figure 4 that profile E spends the least time at high, or maximum, or close to maximum rated static thrust of the engine. Profile E provides the steepest reduction in thrust away from the SLS condition of the profiles shown in Figure 4. The SLS thrust of each profile may be the maximum static thrust the engine can produce, or alternatively may be a high, or close to the maximum, static thrust the engine can produce.

As such the profile E provides the aforementioned advantages, in that by providing a greater thrust take-off ratio (and/or thrust reduction rate) the time at higher engine rated thrusts is reduced. As a result the effects of, for example, cross winds and/or impact on aircraft structures, from take-off, may be minimised.

For example comparing profile E with profile D, both engines are high thrust engines. However at EOR conditions the thrust the wing reacts from the gas turbine engine of profile D is far greater than profile E. As the aerodynamic loads are greater at EOR conditions, it is clear that for profile D at EOR conditions, which typically represent the maximum wing loading, the maximum wing loading will be higher than that for profile E. Surprisingly therefore, by providing an engine with greater SLS thrust, and taking off in the manner of profile E, for example with a thrust take-off ratio of greater than 1.32, the aircraft can take-off in a similar distance to profile D but the maximum wing loading is reduced resulting in a lighter and more optimised wing. Further the time spent near maximum thrust is reduced, providing a gas turbine engine less constrained by take-off constraints.

It can be seen from Figure 4 that the claimed thrust take-off ratio is independent of distance, and is instead only concerned with the thrust at SLS and the thrust at EOR conditions. In contrast the claimed thrust reduction rate is concerned with the reduction in thrust per distance along the runway. It is noted that the Y axis crosses the X-axis at a non-zero position in Figure 4.

Example thrusts for profile E may be a thrust of 267 kN at SLS and 199 kN at EOR, or 311 kN at SLS and 227 kN at EOR. In an example where the first thrust (SLS) is derated, the thrust may be 240 kN at SLS and 199 kN at EOR. This may be achieved by reducing the turbine entry temperature and/or fan rotational speed, for example by 10%, compared to their values at maximum sea level static thrust.

Figure 4 may be to scale such that if profile E has a thrust of 267 kN at SLS and 199 kN at EOR then profile C has a thrust of 238 kN at SLS and 193 kN at EOR and profile D has a thrust of 253 kN at SLS and 230 kN at EOR.

Example take-off distances for profile E may be 1.5km, 1.7km, 2.2km or 2.8km. For example a typical wide-body airplane may have a take-off distance of 2.8km, at sea level conditions and a maximum weight of 280 tonnes. In other examples the airplane may have a take-off weight of for example 70, 200, 250, 300, 350 or 500 tonnes.

The thrust take-off ratio or thrust reduction rate may be particularly advantageous for an airplane with maximum take-off weight between 200 and 350 tonnes. The thrust take-off ratio or thrust reduction rate may be further advantageous for an airplane with maximum take-off weight between 250 and 300 tonnes. For example airplanes with max take-off weight in these ranges may particularly benefit from the aforementioned improvements to the wing and/or withstanding crosswinds.

A thrust take-off ratio of 1.32 and a take-off distance of 2.8km provides a thrust reduction rate of 11%/km. A thrust take-off ratio of 1.8 and a take-off distance of 2.8km provides a thrust reduction rate of 29%/km.

A take-off distance of 2.2km and a thrust take-off ratio of 1.5 gives a thrust reduction rate of 23%/km. A take-off distance of 2.2km and a thrust take-off ratio of 1.8 gives a thrust reduction rate of 36%. A take-off distance of 1.7km and a thrust take-off ratio of 1.55 gives a thrust reduction rate of 32%. A take-off distance of 1.7km and a thrust take-off ratio of 1.7 gives a thrust reduction rate of 41%.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine, the gas turbine engine comprising a fan, a compressor, a low pressure turbine and a high pressure turbine, wherein
the fan diameter is greater than 215 cm and less than 381 cm; and
the gas turbine engine has a first thrust at sea level static conditions and a second thrust at end of runway conditions; and
a thrust take-off ratio greater than 1.32; wherein
the thrust take-off ratio is the ratio of the first thrust to the second thrust.

2. The gas turbine engine according to claim 1, wherein the thrust take-off ratio is greater than 1.33, optionally greater than 1.35, optionally greater than 1.42 or 1.5.

3. The gas turbine engine according to any previous claim, wherein the thrust take-off ratio is less than 1.8, or less than 1.7.

4. The gas turbine engine according to any previous claim, wherein the fan diameter is greater than 250 cm, optionally greater than 300 cm, optionally greater than 330 cm, and optionally greater than 350 cm.

5. The gas turbine engine according to any previous claim, wherein the fan diameter is less than 356 cm, and optionally less than 330 cm, and optionally less than 300 cm.

6. The gas turbine engine according to any previous claim, wherein the gas turbine comprises a power gearbox.

7. The gas turbine engine according to claim 6, wherein the power gearbox comprises a gear ratio greater than 3.1, and optionally less than 3.8, and further optionally between 3.2 and 3.7.

8. The gas turbine engine according to any previous claim, wherein:

   the gas turbine engine has a maximum thrust greater than 180kN, and optionally less than 400kN, and further optionally between 200kN and 300kN; and/or
   the gas turbine engine has a specific thrust at cruise of less than 110 Nkg-1s, and optionally less than 90 Nkg-1s, and further optionally between 90 Nkg-1s and 60 Nkg-1s.

9. The gas turbine engine according to any previous claim, wherein the fan comprises less than 20 fan blades.

10. The gas turbine engine according to any previous claim, wherein the gas turbine engine has a bypass ratio greater than 12, and optionally less than 18 and further optionally between 13 and 16.

11. An aircraft comprising the gas turbine engine according to any previous claim.

**12.** A method of operating a gas turbine engine for take-off of an aircraft, the gas turbine engine in accordance with any one of claims 1 to 10, the method comprising:

generating the first thrust at sea level static conditions; and
generating the second thrust at end of runway conditions such that the thrust take-off ratio is achieved as the aircraft lifts off the ground.

**13.** A method of operating a gas turbine engine for take-off of an aircraft, the gas turbine engine in accordance with any one of claims 1 to 10, the method comprising:

generating a derated first thrust at sea level static conditions; and
generating the second thrust at end of runway conditions; wherein
the derated first thrust is approximately 10% lower than the first thrust.

**14.** A method of taking off an aircraft, the aircraft comprising a gas turbine engine comprising a fan, a compressor, a low pressure turbine and a high pressure turbine; the method comprising:

operating the gas turbine engine to generate a first thrust at sea level static conditions and a second thrust at end of runway conditions; and
applying a thrust reduction rate greater than 11%/km; wherein
the thrust reduction rate is defined as:

$$thrust\ reduction\ rate = \frac{\dfrac{first\ thrust - second\ thrust}{second\ thrust}}{distance\ travelled}$$

wherein the distance travelled is the distance travelled along the runway between sea level static conditions and end of runway conditions; and
lifting off the ground for take-off at end of runway conditions.

**15.** The method of taking off an aircraft according to claim 14, wherein the thrust reduction rate is greater than 20%/km, optionally greater than 30%/km, optionally greater than 40%/km.

Fig.1

Fig.2

FIG. 3

Fig. 4